# EUROPÄISCHE PATENTSCHRIFT

(11) **EP 1 175 770 B1**
(45) Veröffentlichungstag und Bekanntmachung des Hinweises auf die Patenterteilung: **22.12.2004**
(21) Anmeldenummer: 00934895.4
(22) Anmeldetag: 12.04.2000
(51) Int. Cl.: H04M 1/66, H04M 1/274

(54) **FERNSPRECH-ENDGERÄT**
TELEPHONE TERMINAL
TERMINAL TELEPHONIQUE

(30) Priorität: 05.05.1999 DE 19920743
(43) Veröffentlichungstag der Anmeldung: 30.01.2002
(73) Patentinhaber: SIEMENS AKTIENGESELLSCHAFT, 80333 München (DE)
(72) Erfinder: TASTO, Manfred, D-46397 Bocholt (DE)
(86) Internationale Anmeldenummer: PCT/DE2000/001124
(87) Internationale Veröffentlichungsnummer: WO 2000/069153

(56) Entgegenhaltungen:
- EP-A- 0 354 367
- WO-A-98/10571
- US-A- 5 365 570

## Beschreibung

Die Erfindung betrifft ein Fernsprech-Endgerät, insbesondere Mobiltelefon, nach dem Oberbegriff des Anspruchs 1.

Das Telefon, und in den letzten Jahren zunehmend auch das Mobiltelefon, ist zu einem im Lebensalltag praktisch unentbehrlichen Kommunikationsmittel geworden. Es ermöglicht die Pflege privater und geschäftlicher Kontakte, die Inanspruchnahme von Dienstleistungen, die Bestellung von Waren, die Anforderung von Hilfe in Notsituationen etc. über beliebige Entfernungen. Dabei liegt der besondere Vorteil des Mobiltelefons darin, daß es diese Möglichkeiten inzwischen praktisch auch von jedem beliebigen Punkt der entwickelten Industrieländer aus, d.h. auch auf dem Arbeits- oder Schulweg sowie auf Reisen, bietet. Für Kinder und ältere Menschen, deren Mobilität eingeschränkt ist und die in manchen Belangen des täglichen Lebens vergleichsweise unselbständig sind, sind diese Möglichkeiten - speziell unter dem Blickwinkel ihrer Sicherheit - besonders wertvoll.

Jedoch haben ältere Menschen sowie kleine Kinder in der Regel Probleme mit der Bedienung eines herkömmlichen Telefons, insbesondere mit der Bedienung eines Mobiltelefons, das normalerweise mit einer Menüführung arbeitet, die eine Folge interaktiver Bedien- und Wahrnehmungsvorgänge erfordert. Menschen, die sehr schlecht sehen oder nicht lesen können, sind zur Bedienung eines normalen Mobiltelefons überhaupt nicht in der Lage. Der genannte Personenkreis ist also, obwohl die Möglichkeiten des Mobilfunks für ihn von besonderem Wert sind, von der Nutzung dieser Möglichkeiten weitgehend ausgeschlossen.

Die relativ komplizierte Bedienung moderner Telefone, insbesondere der Mobiltelefone, ist eine mehr oder weniger notwendige Folge Ihrer umfangreichen Funktionalität, die auf Nutzer mit hohen Ansprüchen zugeschnitten ist.

Die Anforderungen älterer Menschen oder kleiner Kinder an ein Fernsprech-Endgerät sind demgegenüber äußerst einfach: Sie wollen oder sollen in der Regel nur mit wenigen Personen (Eltern, Nachbarn, Arzt, Polizei ...) Verbindung aufnehmen können, und Zusatzfunktionen sind für Sie praktisch völlig uninteressant. Sie benötigen zur Bedienung des Telefons daher eigentlich kein Display und auch keine normale Ziffern- und Funktionstastatur. Diese Komponenten eines normalen modernen Fernsprech-Endgerätes verleiten diese Personen vielmehr zu Fehlbedienungen und machen die Aufnahme der gewünschten Verbindungen vielfach unmöglich. Auf der anderen Seite ist aber die Benutzeroberfläche derartiger. Geräte auf das Vorhandensein und die Nutzung des Displays und der Funktionstastatur derart zugeschnitten, daß auch einfache, unverzichtbare Bedienvorgänge - wie die Aktivierung eines Mobiltelefons über die Eingabe der PIN, eine Zielwahl, die Rufannahme und Gesprächsbeendigung etc. - die Benutzung der Funktionstastatur und zumeist auch des Displays voraussetzen.

Aus WO 98/10571 ist ein Tastaturadapter bekannt, welcher auf die eigentliche, erste Tastatur des Mobiltelefons gesteckt wird. Auf diesem Tastaturadapter befinden sich weitere Tasten, die eine zweite Tastatur bilden. Die Tasten auf dieser zweiten Tastatur sind derart räumlich angeordnet, daß mittels dieser zweiten Tastatur die darunterliegende erste Tastatur des Mobiltelefons bedient werden kann. Da der angegebene Personenkreis vorwiegend nur ausgewählte Tasten der Mobilfunktelefontastatur betätigt, sind diese auf der zweiten Tastatur beispielsweise größer ausgestaltet. Dadurch ist es für körperbehinderte Personen einfacher, die nun größeren Tasten zu bedienen.

Der Erfindung liegt nun die Aufgabe zugrunde, ein Fernsprech-Endgerät anzugeben, das auf die Bedürfnisse von älteren Menren Menschen und Kindern zugeschnitten ist und nicht nur leicht und sicher bedienbar ist, sondern auch eine vereinfachte Benutzerführung anbietet.

Die Erfindung schließt den wesentlichen Gedanken ein, in einer modularen Ergänzung der herkömmlichen Benutzeroberfläche und entsprechenden Eingabeeinrichtung eine zusätzliche, extrem einfache Benutzeroberfläche und Eingabeeinrichtung vorzusehen, die auf die Wahrnehmungsmöglichkeiten und Bedienfertigkeiten von Kindern und älteren Menschen speziell zugeschnitten ist. Sie schließt weiter den Gedanken ein, die zusätzliche Eingabeeinrichtung bei Nutzung des Fernsprech-Endgerätes durch den angesprochenen Personenkreis quasi an die Stelle der normalen Eingabeeinrichtung zu setzen, indem sie die letztere beim entsprechend ausgerüsteten Fernsprech-Endgerät im wesentlichen überdeckt und damit unzugänglich macht. Auf diese Weise werden Irritationen und Fehlbedienungen praktisch ausgeschlossen, und die Hemmschwelle für die Benutzung eines modernen Fernsprech-Endgerätes beim genannten Personenkreis wird abgebaut.

Die zusätzliche Eingabeeinrichtung enthält in einer bevorzugten Ausführung nur die zur Aufnahme sowie Beendigung einiger weniger vorbestimmter Verbindungen erforderlichen Bedienelemente, nämlich eine oder mehrere Zielwahltaste(n) und eine Ein-/Aus-Taste zur Rufannahme/Gesprächsbeendigung. (Eine Ein/Aus-Taste ist natürlich nur für ein Mobil- oder Schnurlostelefon, nicht aber für ein leitungsgebundenes Fernsprech-Endgerät erforderlich.)

Sonstige notwendige Bedienvorgänge, wie insbesondere die Authentisierung durch PIN-Eingabe bei Einschaltung eines Mobiltelefons (die in den Mobilfunktstandards zwingend vorgeschrieben ist) sowie die Programmierung der Zielwahltasten werden unter Nutzung der herkömmlichen ersten Eingabeeinrichtung durch andere Personen vorgenommen, die über die dazu erforderlichen Fertigkeiten und Kenntnisse verfügen, beispielsweise Elternteile der erwähnten Kinder oder erwachsene Kinder, Pfleger oder Bekannte älterer Menschen. Durch die Erfindung wird damit das Problem gelöst, einerseits eine komplexe Benutzeroberfläche zur umfassenden Bedienung und Programmierung des Fernsprech-Endgerätes verfügbar haben zu müssen und andererseits einem Benutzerkreis mit eingeschränkten Fertigkeiten eine einfache, ohne weiteres handhabbare Benutzeroberfläche bereitzustellen.

Die vorgeschlagene Lösung ist unter Kostenaspekten insofern vorteilhaft, als Sie im Grunde eine Nachrüstung von in Großserien (und damit kostengünstig) hergestellten Fernsprech-Endgeräten darstellt, das Großserienprodukt nicht verteuert und zusätzliche Kosten für die "Simpel-Benutzeroberfläche" nur für die tatsächlichen Nutzer (bzw. deren Familien) mit sich bringt.

Die in einem Aufsatz-Modul aufgenommene zweite Eingabeeinrichtung weist zweckmäßigerweise eine Steckerleiste als Teil einer standardisierten Steckverbindung zwischen dem Telefongehäuse und dem Aufsatz-Modul auf. Diese Steckerleiste kann beispielsweise an die bei hochwertigeren Mobiltelefonen vorhandene Normbuchse zum Anschluß eines Laptop angepaßt sein. Die Steckverbindung weist zweckmäßigerweise einen Erkennungskontakt auf, über den im Telefon erfaßt wird, daß das Aufsatu-Modul aufgesetzt ist. Mittels dieses Erkennungs-Kontaktes kann eine Umschaltung der Steuerung bzw. Bedienung von der ersten auf die zweite (aufgesetzte) Eingabeeinrichtung vorgenommen werden. Da in der bevorzugten Ausführung die erste Eingabeeinrichtung dann völlig abgeschaltet wird, sind eine Konkurrenz zwischen den Eingabeeinrichtungen sowie Fehlbedienungen und mechanische Manipulationen praktisch ausgeschlossen.

In einer insbesondere für ein Mobiltelefon zweckmäßigen weiteren Ausgestaltung ist mit dem Erkennungs-Kontakt ein Ausschalter verbunden, über den das Telefon ausgeschaltet wird, wenn ein einmal aufgesetztes Aufsatz-Modul vom Telefongehäuse wieder gelöst wird. Das Mobiltelefon wird dann abgeschaltet und ist erst nach Reaktivierung unter Einschluß eines Authentisierungsvorganges (Eingabe eines PIN-Codes) wieder nutzbar. Verliert also der Benutzer das Mobiltelefon mit aufgestecktem Aufsatz-Modul oder wird es ihm gewaltsam abgenommen, so kann ein neuer Besitzer (Finder oder Dieb) allenfalls die vorprogrammierten Zielwahlnummern wählen - was natürlich für ihn uninteressant oder sogar riskant ist. Mit dieser Ausgestaltung wird also ein wirksamer Diebstahlschutz realisiert.

Die im Aufsatz-Modul befindliche zweite Eingabeeinrichtung weist bevorzugt eine Mehrzahl von Zielwahltasten auf, denen in einer weiteren bevorzugten Ausgestaltung eine Wahlfolge-Steuereinrichtung zur automatischen Ausführung einer Folge vorbestimmter Wahlvorgänge zugeordnet ist. Diese Wahlfolge-Steuereinrichtung kann durch geeignete Programmierung des Mobiltelefons softwaremäßig realisiert werden. Mit dieser Funktion wird zusätzliche Sicherheit für Notsituationen geschaffen, denn sie ermöglicht es auch einem weitgehend hilflosen Nutzer, von mehreren wichtigen Kontaktpersonen mindestens eine zu erreichen, ohne über eine Folge von Bedienvorgängen nachdenken und diese ausführen zu müssen.

In Anpassung an die in der Regel eingeschränkten Wahrnehmungsmöglichkeiten der Zielgruppe sind die Eingabeelemente der zweiten Eingabeeinrichtung vorzugsweise größer als die üblichen Tasten moderner Fernsprech-Endgeräte und/oder in Signalfarben und/oder mit einprägsamen Symbolen oder deutlicher Beschriftung versehen, um die Bedienung zu erleichtern und Irrtümer auszuschließen.

Den Eingabeelementen (insbesondere Tasten) können Beleuchtungsmittel zugeordnet sein, die eine sichere Bedienung auch bei schlechten Lichtverhältnissen gewährleisten. Optional kann diesen Beleuchtungsmitteln, falls sie als separate, aktive Lichtquelle(n) des Aufsatz-Moduls realisiert sind, ein Ein-/Ausschalter zugeordnet sein, um die Standby-Zeit zu verlängern. Grundsätzlich ist eine Realisierung der Beleuchtungseinrichtung auch in Form einer Lichtleiteinrichtung möglich, die eine Beleuchtungsfunktion des Basisgerätes (insbesondere dessen Displaybeleuchtung) nutzt.

In einer besonders für Kinder geeigneten Ausführung sind Verriegelungsmittel zur kindersicheren Verriegelung des Aufsatz-Moduls mit dem Gehäuse vorgesehen. Ein entsprechend ausgerüstetes Fernsprech-Endgerät ist dann auch gegen absichtsvolle Manipulationen von Kindern zur Entfernung des Aufsatz-Moduls weitgehend geschützt.

Ein guter Schutz der eigentlichen Telefontastatur (der ersten Eingabeeinrichtung) sowie des Anzeigefeldes gegen zufällige oder mutwillige Beschädigungen läßt sich dadurch erreichen, daß das Aufsatz-Modul so gestaltet ist, daß es im wesentlichen die gesamte Oberseite des Telefongehäuses bedeckt, wobei es speziell bei Mobil- und Schnurlostelefon den Mikrofon- und Lautsprecherbereich freiläßt.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine Schrägansicht eines Mobiltelefons mit aufgesetztem Aufsatz-Modul in skizzenhafter Darstellung,
Fig. 2 eine ebenfalls skizzenhafte Querschnittsdarstellung des Gehäuses sowie des Aufsatz-Moduls beim Mobiltelefon nach Fig. 1 und
Fig. 3 ein Funktions-Blockschaltbild eines mit Aufsatz-Modul ausgerüsteten Mobiltelefons gemäß einer Ausführungsform der Erfindung.

Ein Mobiltelefon 1 hat in an sich bekannter Weise ein Kunststoffgehäuse 3, aus dem eine Antenne 5 herausragt und in das Durchlässe zur Bildung eines Lautsprecherbereiches 7 und eines Mikrofonbereiches 9 sowie eine Ausnehmung zur Aufnahme einer Anschlußbuchse 11 eingearbeitet sind.

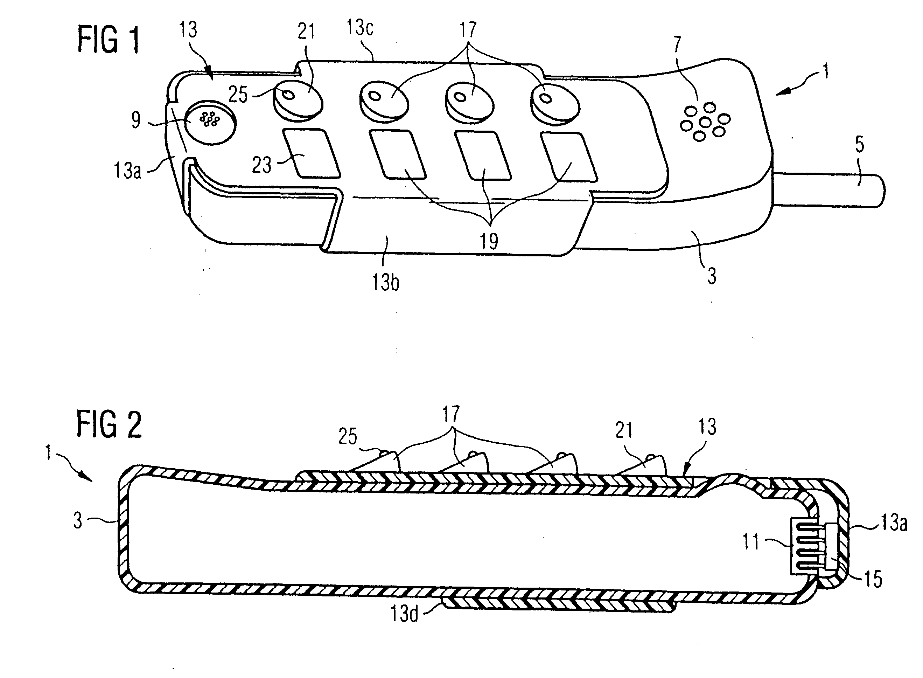

Im in Fig. 1 und 2 gezeigten Zustand ist auf das Mobiltelefon 1 - dessen (nicht dargestellte) Tastatur und Display vollständig bedeckend - ein Aufsatz-Modul 13 so aufgesetzt, daß es über eine in einem Stirnseiten-Wangenbereich 13a liegende Steckerleiste 15, die passend zur Anschlußbuchse 11 ausgeführt ist, elektrisch an das Mobiltelefon 1 angeschlossen ist.

Neben dem Stirnseiten-Wangenbereich 13a gehen von der Basisfläche des Aufsatz-Moduls 13 zwei Seitenwangenbereiche 13b, 13c in annähernd rechtwinkliger Erstreckung zur Basisfläche ab, und vom Seitenwangenbereich 13b ausgehend erstreckt sich ein Bodenteil 13d unter einen Abschnitt der Gehäuseunterseite des Gehäuses 3. Die gesamte Schale des Aufsatz-Moduls ist formelastisch aus Kunststoff gefertigt, so daß das Aufsatz-Modul insgesamt ein elastisch auf das Mobiltelefongehäuse 3 aufklemmbares Teil bildet, dessen Aufklemmen infolge der speziellen Anordnung von Stirnseiten-Wangenbereich 13a, Seitenwangenbereichen 13b, 13c und Bodenbereich 13d ebenso eine gewisse Fingerfertigkeit erfordert wie insbesondere das Abziehen vom Gehäuse 3, so daß die Seitenwangen 13b, 13c und das Bodenteil 13d zusammen auch als kindersicheres Verriegelungsmittel anzusprechen sind. Diese Ausführung stellt jedoch nur eine von vielen möglichen dar, wobei als Verriegelungsmittel auch einfache Schlüssel-/Rast-Mechanismen in Frage kommen, wie sie etwa von kindersicheren Gefäßverschlüssen oder aus dem Haushaltgerätebereich bekannt sind.

Der die Tastatur und das Display des Mobiltelefons 1 bedekkende Basisabschnitt des Aufsatz-Moduls trägt drei große kreisförmige Zielwahltasten 17, denen jeweils ein Symbol- bzw. Beschriftungsfeld 19 zugeordnet ist sowie eine (in der Figur ebenfalls kreisförmig dargestellte, aber bei dieser Ausführung zumindest farblich gegenüber den Zielwahltasten abgesetzte) Ein-/Aus-Taste 21 zur Rufannahme und Gesprächsbeendigung. Auch dieser Taste ist ein Symbolfeld 23 zugeordnet. Die Bedientasten 17, 21 stehen aus haptischen Gründen relativ weit aus der Oberfläche des Aufsatz-Moduls 13 hervor und haben einen größeren Tastenhub als übliche Mobiltelefon-Tasten, um dem Benutzer eine sichere Rückmeldung über die Tastenbetätigung zu geben. Bei der in Fig. 1 und 2 gezeigten einfachen Ausführung sind die Tastaturfunktionen der Tastatur 17, 21 durch einfache Schaltkontakte realisierbar, die über separate Zuleitungen mit der Steckerleiste 15 verbunden sind.

Zur Erleichterung einer sicheren Auffindung der Eingabetasten 17, 21 in der Dunkelheit ist in diese jeweils eine LED 25 integriert, die über die Steckverbindung 11, 15 aus dem Mobiltelefon 1 mit Strom versorgt wird.

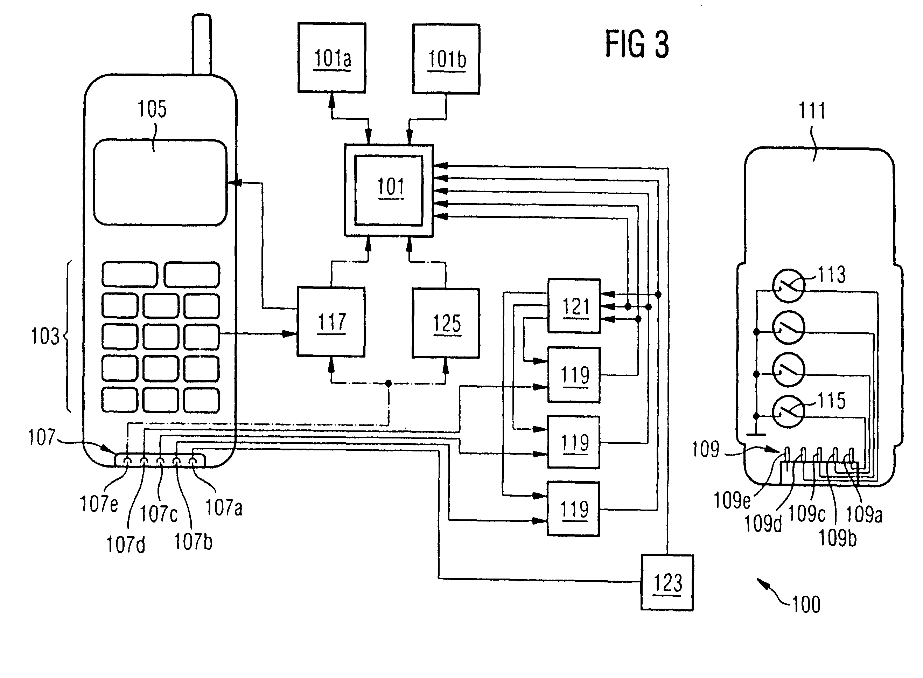

Fig. 3 zeigt in Form eines nur die für die Ausführung der Erfindung wesentlichen Komponenten darstellenden Funktions-Blockschaltbildes eines Mobiltelefons eine Ausführungsform der elektronischen Realisierung der in Fig. 1 und 2 hinsichtlich ihres mechanischen Aufbaus skizzierten Anordnung.

Ein Mobiltelefon 100 weist in an sich bekannter Weise einen Mikroprozessor 101 mit zugeordnetem Arbeitsspeicher 101a und Programmspeicher 101b als zentrale Verarbeitungs- und Steuereinrichtung, eine Eingabetastatur 103 zur Funktionssteuerung und Ziffernwahl, eine Anzeigeeinrichtung 105 zur Wahlziffernund Informationsdarstellung und Menüführung und eine Anschlußbuchse 107 zum Anschluß einer externen Dateneingabeeinrichtung auf. Der Logik- und funktechnische Teil des Mobiltelefons ist für die Ausführung der Erfindung nicht belangvoll und wird daher in Fig. 3 nicht gezeigt und hier nicht erläutert.

Die Anschlußbuchse 107 weist Kontakte 107a bis 107e auf, denen Steckerkontakte 109a bis 109e eines Steckers 109 eines Aufsatz-Moduls 111 entsprechen. Das Aufsatz-Modul 111 weist drei Zielwahltasten 113 und eine Ein-/Aus-Taste 115 zur Rufannahme und Gesprächsbeendigung auf, denen die Steckerkontakte 109b bis 109d bzw. 109a zugeordnet sind.

Technisch kann die Funktion der erwähnten Tasten - die die einfachste, aber nicht die einzige Form der Realisierung der Eingabeelemente darstellen - durch das Vorsehen je eines Schaltkontaktes pro Taste realisiert werden. Soll eine größere Anzahl von Zielwahltasten vorgesehen werden, so kann auch eine an sich bekannte Tastatur-Schaltmatrix eingesetzt werden, um die Zahl der Zuleitungen zu begrenzen. Schließlich kann auch eine als "intelligente Tastatur" anzusprechende Eingabeeinrichtung eingesetzt werden, bei der das Aufsatz-Modul einen Mikrocontroller aufweist, der die Schaltinformationen der einzelnen Tasten in sequenzielle Signalfolgen (Bitfolgen) umsetzt und eine Reduzierung der Kontaktzahl bewirkt.

Der zusätzliche Steckerkontakt 109e dient (im Zusammenwirken mit dem entsprechenden Buchsenkontakt 107e) als Erkennungs-Kontakt zur Erfassung dessen, ob das Aufsatz-Modul 111 auf das Mobiltelefon 100 aufgesetzt ist. Ist dies der Fall, so wird durch den Steckerkontakt 109e eine Schaltstufe 117 im Mobilteil angesteuert, die die Verbindung der Eingabetastatur 103 und des Displays 105 der Steuereinrichtung 101 unterbricht. Zugleich werden beim Aufsetzen des Aufsatz-Moduls 111 den Zielwahltasten 113 Zielwahl-Speicherbereiche 119 zugeordnet, die durch Betätigung einer der Zielwahltasten, d.h. Schließung des zugeordneten Kontakts, adressiert werden und über den Mikroprozessor 101 und das (nicht dargestellte) Logikteil die Ausgabe eines Rufes an einen Verbindungsteilnehmer mit der vorab in den Speicherbereichen 119 spezifizierten Rufnummer veranlassen.

Den Speicherbereichen 119 ist zudem eine Wahlfolgesteuereinrichtung 121 zugeordnet, über die bei erfolgloser Betätigung einer der Zielwahltasten (d.h. Nichterreichbarkeit des entsprechenden Verbindungsteilnehmers) eine sequentielle Adressierung der übrigen Speicherbereiche bis zur Quittierung eines der Rufe initiiert. Mit dem Aufstecken des Aufsatz-Moduls 111 wird auch die Rufannahme-/Gesprächsbeendigungs-Taste 115 einem entsprechenden Steuerbereich 123 des Mikroprozessors zugeordnet und tritt an die Stelle der entsprechenden Taste des deaktivierten Tastenfeldes 103. Eine ebenfalls mit der Steckverbindung 107e, 109e verbundene Ausschaltstufe 125 schaltet beim Lösen des Aufsatz-Moduls vom Mobiltelefon das Gerät komplett ab.

Das Mobiltelefon 100 wird bei Inbetriebnahme (ohne aufgestecktes Aufsatz-Modul) unter Nutzung der Eingabetastatur 103 durch Eingabe eines PIN-Codes in üblicher Weise aktiviert. Dies kann z.B. von den Eltern eines das Mobiltelefon nutzenden Kindes oder einer Pflegeperson eines gebrechlichen älteren Menschen ausgeführt werden. Anschließend wird, ebenfalls unter Nutzung der Eingabetastatur 103, eine Programmierung der Zielwahlspeicher 119 unter Benutzung der normalen Benutzeroberfläche (Menüsteuerung) ausgeführt. Hierbei wird für jede der Zielwahltasten 113 eine Rufnummer programmiert. Nachdem dies geschehen ist, wird das Aufsatz-Modul 111 aufgesetzt. Mittels des erwähnten Erkennungskontakts erkennt das Mobiltelefon, daß das Aufsatz-Modul aufgesteckt ist, und eine Betätigung ist nach der erwähnten Deaktivierung der Tastatur 103 nur noch über die Tasten 113, 115 des Aufsatz-Moduls möglich. Damit ist das Mobiltelefon mit der "Simpel-Benutzeroberfläche" betriebsbereit. Da das Aufsatz-Modul die Ladebuchse freiläßt, kann der Akku nach wie vor geladen werden. Da die Eingabetastatur 103 verdeckt und deaktiviert ist, ist jedoch weder eine Ausschaltung des Gerätes noch eine erneute Eingabe der PIN möglich. Damit sind Fehlbedienungen weitgehend ausgeschlossen. Wie weiter oben bereits erwähnt, wird durch die Ausschaltstufe 125 gesichert, daß das Mobiltelefon bei Abnahme des Aufsatz-Moduls ausgeschaltet wird und nicht mißbräuchlich benutzt werden kann.

Die Ausführung der Erfindung ist nicht auf die beschriebenen Beispiele beschränkt, sondern auch in einer Vielzahl von Abwandlungen für andere Geräte und Anwendungen möglich. So kann bei der weiter oben genannten "intelligenten" Tastatur der "Erkennungskontakt" durch einen bestimmten Signalcode ersetzt sein.

## Patentansprüche

1. Fernsprech-Endgerät, insbesondere Mobiltelefon (1; 100) mit einem Gehäuse (3), einer ersten Eingabeeinrichtung (103) zur Steuerung aller implementierten Funktionen und zur Ziffern-Eingabe von Rufnummern und einer in einem Aufsatz-Modul (13; 111) aufgenommenen und auf das Gehäuse aufsetzbaren zweiten Eingabeeinrichtung (17; 113), wobei die zweite Eingabeeinrichtung im aufgesetzten Zustand die erste Eingabeeinrichtung mindestens teilweise überdeckt,
**dadurch gekennzeichnet daß**
der Kontakt zwischen Mobiltelefon und Aufsatz-Modul (13; 111) mittels einer Steckerleiste als Teil einer standardisierten Steckverbindung (13, 15; 107, 109) herstellbar ist und daß die Steckverbindung einen Erkennungskontakt zur Umschaltung der Steuerung von der ersten auf die zweite Eingabeeinrichtung aufweist.

2. Fernsprech-Endgerät nach Anspruch 1,
**gekennzeichnet durch**
die Ausführung als Mobiltelefon (1; 100) und das Vorsehen eines Eingabeelementes (21; 115) zur Rufannahme und Gesprächsbeendigung.

3. Fernsprech-Endgerät nach einem der vorhergehenden Ansprüche,
**dadurch gekennzeichnet, daß**
die Steckverbindung (13, 15; 107, 109) einen Erkennungs-Kontakt (109e) umfaßt, über den das Aufgesetztesein des Aufsatz-Moduls (13; 111) erfaßt und das Fernsprech-Endgerät (1; 100) auf Steuerung durch die zweite Eingabeeinrichtung (17, 21; 113, 115) umgeschaltet wird, wobei insbesondere die erste Eingabeeinrichtung (103) insgesamt abgeschaltet wird.

4. Fernsprech-Endgerät nach Anspruch 3,
**gekennzeichnet durch**
einen mit dem Erkennungs-Kontakt (109e) verbundenen Ausschalter (125), über den bei einem Abnehmen des Aufsatz-Moduls (13; 111) das Fernsprech-Endgerät (1; 100) ausgeschaltet wird.

5. Fernsprech-Endgerät nach einem der vorangehenden Ansprüche,
**dadurch gekennzeichnet,** da**ß**
die zweite Eingabeeinrichtung (17, 21; 113, 115) eine Mehrzahl von Zielwahltasten (17; 113) und eine diesen zugeordnete Wahlfoigesteuereinrichtung (121) zur automatischen Ausführung einer Folge vorbestimmter Wahlvorgänge aufweist.

6. Fernsprech-Endgerät nach einem der vorangehenden Ansprüche,
**gekennzeichnet durch**
Verriegelungsmittel (13b-d) zur kindersicheren Verriegelung des Aufsatz-Moduls (13) mit dem Gehäuse (3).

7. Fernsprech-Endgerät nach einem der vorangehenden Ansprüche,
**dadurch gekennzeichnet, daß**
das Aufsatz-Modul (13) unter Freilassung des Lautsprecherund Mikrofonbereiches (7, 9) im wesentlichen die gesamte Oberseite des Gehäuses (3) bedeckt.

8. Fernsprech-Endgerät nach einem der vorangehenden Ansprüche,
**dadurch gekennzeichnet, daß**
das Aufsatz-Modul (13) Beleuchtungsmittel (25) zur Beleuchtung der zweiten Eingabeeinrichtung (17; 21) aufweist.

## Claims

1. Telephone terminal, in particular a mobile telephone (1; 100) having a housing (3) and having a first input device (103) for controlling all the implemented functions and for entering the digits of telephone numbers, and having a second input device (17; 113) which is held in a snap-on module (13; 111) and can be fitted to the housing, with the second input device at least partially covering the first input device when it is fitted,
**characterized in that**
the contact between the mobile telephone and the snap-on module (13; 111) can be produced by means of a connector strip as part of a standardized plug connection (13, 15; 107, 109), and **in that** the plug connection has an identification contact for switching the controller from the first to the second input device.

2. Telephone terminal according to Claim 1,
**characterized by**
configuration as a mobile telephone (1; 100) and the provision of an input element (21; 115) for call acceptance and call termination.

3. Telephone terminal according to one of the preceding claims,
**characterized in that**
the plug connection (13, 15; 107, 109) has an identification contact (109e) via which the fact that the snap-on module (13; 111) is fitted is detected, and the telephone terminal (1; 100) is switched to be controlled by the second input device (17, 21; 113, 115), with, in particular, the first input device (103) being entirely switched off.

4. Telephone terminal according to Claim 3,
**characterized by**
an off switch (125), which is connected to the identification contact (109e), and via which the telephone terminal (1; 100) is switched off when the snap-on module (13; 111) is removed.

5. Telephone terminal according to one of the preceding claims,
**characterized in that**
the second input device (17, 21; 113, 115) has a number of speed-dialling keys (17; 113) and an associated dialling sequence control device (121), in order to carry out a sequence of predetermined dialling processes automatically.

6. Telephone terminal according to one of the preceding claims,
**characterized by**
locking means (13b-d) for childproof locking of the snap-on module (13) to the housing (3).

7. Telephone terminal according to one of the preceding claims,
**characterized in that**
the snap-on module (13) essentially covers the entire top face of the housing (3), leaving the loudspeaker and microphone areas (7, 9) free.

8. Telephone terminal according to one of the preceding claims,
**characterized in that**
the snap-on module (13) has lighting means (25) for illuminating the second input device (17; 21).

## Revendications

1. Terminal téléphonique, en particulier téléphone mobile (1 ; 100) comprenant un boîtier (3), un premier dispositif d'entrée (103) pour la commande de toutes les fonctions mises en place et pour l'entrée de chiffres de numéros d'appel et d'un second dispositif d'entrée (17 ; 113) logé dans un module rapporté (13 ; 111) et pouvant être posé sur le boîtier, le second dispositif d'entrée recouvrant au moins partiellement le premier dispositif d'entrée dans l'état posé,
**caractérisé en ce que**
le contact entre le téléphone mobile et le module rapporté (13 ; 111 ) peut être établi au moyen d'une réglette de contacts comme partie d'un connecteur enfichable (13, 15 ; 107, 109) standardisé et **en ce que** le connecteur enfichable présente un contact d'identification pour la commutation de la commande du premier dispositif d'entrée au second dispositif d'entrée.

2. Terminal téléphonique selon la revendication 1,
**caractérisé par**
la réalisation sous la forme d'un téléphone mobile (1 ; 100) et la prévision d'un élément d'entrée (21 ; 115) pour la prise d'appel et la fin de conversation.

3. Terminal téléphonique selon l'une quelconque des revendications précédentes,
**caractérisé en ce que**
le connecteur enfichable (13, 15 ; 107, 109) comprend un contact d'identification (109e) par lequel la présence du module rapporté (13 ; 111) posé dessus est détectée et le terminal téléphonique (1 ; 100) est commuté sur la commande par le second dispositif d'entrée (17, 21 ; 113, 115), en particulier le premier dispositif d'entrée (103) étant globalement déconnecté.

4. Terminal téléphonique selon la revendication 3,
**caractérisé par**
un interrupteur (125) relié au contact d'identification (109e), par lequel le terminal téléphonique (1 ; 100) est éteint lors d'un enlèvement du module rapporté (13 ; 111).

5. Terminal téléphonique selon l'une quelconque des revendications précédentes,
**caractérisé en ce que**
le second dispositif d'entrée (17, 21 ; 113, 115) présente une pluralité de touches de présélection (17 ; 113) et un dispositif de commande de séquence de sélection (121) attribué à ces touches pour l'exécution automatique d'une séquence d'opérations de sélection prédéfinies.

6. Terminal téléphonique selon l'une quelconque des revendications précédentes,
**caractérisé par**
des moyens de verrouillage (13b-d) pour le verrouillage à sécurité enfant du module rapporté (13) avec le boîtier (3).

7. Terminal téléphonique selon l'une quelconque des revendications précédentes,
**caractérisé en ce que**
le module rapporté (13) recouvre sensiblement l'ensemble du coté supérieur du boîtier (3) en laissant libre la zone du haut-parleur et la zone du microphone (7, 9).

8. Terminal téléphonique selon l'une quelconque des revendications précédentes,
**caractérisé en ce que**
le module rapporté (13) présente des moyens d'éclairage (25) pour l'éclairage du second dispositif d'entrée (17 ; 21).
